# EUROPÄISCHE PATENTSCHRIFT

(11) **EP 3 000 838 B1**
(45) Veröffentlichungstag und Bekanntmachung des Hinweises auf die Patenterteilung: **02.05.2018**
(21) Anmeldenummer: 15002700.1
(22) Anmeldetag: 17.09.2015
(51) Int. Cl.: C08J 3/18, C08J 5/18, C08K 5/00, C08K 5/06, C08K 5/12, C08L 27/06

(54) **VERFAHREN ZUR HERSTELLUNG EINER EIN THERMOPLASTISCHES POLYMERISAT AUFWEISENDEN FOLIE**
METHOD FOR THE PREPARATION OF A FILM COMPRISING A THERMOPLASTIC POLYMERISATE
PROCEDE DE FABRICATION D'UNE FEUILLE PRESENTANT UN PRODUIT DE POLYMERISATION THERMOPLASTIQUE

(30) Priorität: 19.09.2014 DE 102014113549
(43) Veröffentlichungstag der Anmeldung: 30.03.2016
(73) Patentinhaber: Nyssen, Siegfried, 94315 Straubing (DE)
(72) Erfinder: Nyssen, Siegfried, 94315 Straubing (DE)
(74) Vertreter: Schlimme, Wolfram

(56) Entgegenhaltungen:
- DE-A1-102004 023 658
- DE-A1-102010 061 871
- US-A- 2 783 270
- PRYDE E H ET AL: "Azelaaldehydic acid ester-acetal derivatives as plasticizers for poly(vinyl chloride)", POLYMER ENG. SCI,, Bd. 6, Nr. 1, 1. Januar 1966 (1966-01-01), Seiten 60-65, XP008158448, DOI: 10.1002/PEN.760060111 [gefunden am 2004-08-25]
- LEONARD G KRAUSKOPF: "How About Alternatives to Phthalate Plasticizers?", JOURNAL OF VINYL & ADDITIVE TECHNOLOGY, Bd. 9, Nr. 4, 1. Dezember 2003 (2003-12-01), Seiten 159-171, XP055011221,

## Beschreibung

Die vorliegende Erfindung betrifft ein Verfahren zur Herstellung einer ein thermoplastisches Polymerisat aufweisenden Folie durch Gelieren oder Sintern eines Gemisches aus Thermoplast und Weichmacher. Sie betrifft weiterhin eine nach einem dieser Verfahren hergestellte Folie aus oder mit einem thermoplastischen Polymerisat sowie einen Formkörper, der aus oder mit einer derartigen Folie aus einem thermoplastischen Polymerisat hergestellt ist.

### TECHNISCHES GEBIET

Weiche, elastische PVC-Folien, die beispielsweise als Oberflächenhaut von Formkörpern, wie Innenraum-Verkleidungsteilen in Kraftfahrzeugen, dienen sollen, können durch Sintern von pulverförmigen thermoplastischen Gemischen aus Polyvinylchlorid (PVC) und Weichmachern mit Hilfe eines temperierten Formwerkzeugs hergestellt werden. Diese Folien werden auch als "PVC Slushhäute" und die entsprechenden Herstellverfahren als "Pulverslush"-Verfahren bezeichnet. Ein Verfahren zur Herstellung von Slush-Häuten nach dem Pulverslush-Verfahren ist aus der DE 39 32 923 A1 bekannt.

Aus der DE 34 17 727 A1 ist ein Verfahren zum Herstellen von dünnwandigen Körpern aus gießfähigem Kunststoff ("Plastisol") bekannt. Allgemein bekannt ist auch ein Verfahren zur Herstellung von Weich-PVC-Folien durch Aufstreichen von in Weichmacher aufgeschlämmtem PVC ("Plastisol"), auf ein strukturiertes, beheizbares Transportband.

### STAND DER TECHNIK

Die Herstellung von PVC-Häuten durch Sinterverfahren ist bekannt. Auf diese Weise hergestellte PVC-Häute werden in der Automobilindustrie in großem Umfang für Instrumententafelhäute und Türverkleidungshäute eingesetzt. Diese "Slushhäute" können alternativ auch aus pulverisiertem thermoplastischem Polyurethan (TPU) oder Polypropylen-Copolymeren (PP) hergestellt werden, diese haben sich aber auf dem Markt nicht durchgesetzt. So zeigt TPU wegen des hohen Preises der Rohstoffe ein ungünstiges Preis-Leistungsverhältnis und PP-Slushhäute besitzen ein für Automobilanwendungen ungenügendes mechanisches Eigenschaftsprofil, insbesondere eine zu geringe Kratzfestigkeit.

Zur Herstellung von PVC-Folien nach dem PVC-Pulverslush-Verfahren wird das Formwerkzeug in einem Ofen auf ungefähr 250 °C erhitzt. Danach wird das pulverförmige PVC gleichmäßig auf den Formoberflächen des Formwerkzeugs verteilt. Zum Ausgelieren der PVC-Haut wird das Formwerkzeug erneut im Ofen erwärmt. Nach dem Abkühlen des Formwerkzeugs, z.B. in einem Wasserbad, kann die Folie entnommen und beispielsweise zur Hinterschäumung eingesetzt werden. Die nach dem PVC-Pulverslush-Verfahren hergestellten Folien sind im Vergleich zu ABS/PVC-Folien, PU-IMC-Folien und TPU-Folien erheblich kostengünstiger.

Bei der Herstellung von Weich-PVC-Folien durch Aufstreichen von in Weichmacher aufgeschlämmtem PVC auf ein strukturiertes, beheizbares Transportband nach dem "Plastisol"-Verfahren werden die Folien häufig in zwei aufeinander folgenden Arbeitsgängen aufgestrichen, wobei die zweite Schicht Treibmittel enthält. Dadurch wird eine PVC-Schaumfolie mit fester, ungeschäumter Deckhaut erhalten.

Bekannt ist ferner die Verwendung von dekorativen Kunststoff-Folien im Kraftfahrzeug-Innenraum, wobei Kunststoff-Formteile mit den Folien beschichtet oder die Folien oder Häute mit Schaumstoffen, vorzugsweise PU-Schaumstoff, hinterschäumt werden.

Nachteilig bei den vorstehend beschriebenen weichen PVC-Folien sind die durch den hohen Weichmacheranteil bedingten Emissionen. Diese werden nach dem Stand der Technik durch den Einsatz langkettiger Weichmacher reduziert, dies stößt aber bei dem PVC-Pulverslush-Verfahren an Grenzen, da bei Kettenlängen ab C₁₀ das PVC-Pulver im Mischprozess den Weichmacher nicht mehr bereitwillig aufnimmt, oder nur in geringerer als der geforderten Menge aufnimmt. Die Folge ist eine verminderte Rieselfähigkeit der Pulver im Sinterprozess.

Ein weiterer Nachteil von vielen weichen PVC-Pulverslush-Folien, auch bei reduzierten Emissionen von flüchtigen organischen Verbindungen (VOC - volatile organic compounds), ist ein als unangenehm empfundener Geruch. Eine der Ursachen können Organozinn-Verbindungen sein, die als Stabilisatoren gegen thermischen Abbau zugesetzt werden. Dies betrifft hauptsächlich Folien, die nach dem Plastisol-Verfahren hergestellt worden sind. Bei nach dem PVC-Pulverslush-Verfahren hergestellten Folien kommen nach dem Stand der Technik lediglich geruchsarme Kalzium-Zink-Stabilisatoren zum Einsatz. Hier sind die Quellen des unangenehmen Geruchs meist thermische Abbauprodukte von Weichmachern, insbesondere längerkettige Alkohole. Messungen haben ergeben, dass sich durch den Sinterprozeß bis zu 10.000 ppm/kg solcher Alkohole bilden können.

Eine Maskierung dieser Gerüche durch Zugabe von wohlriechenden Additiven (Vanillin, Menthol, etc.) ist nicht zielführend, da dabei während des Sinterprozesses hohe Konzentrationen dieser Additive im Arbeitsumfeld entstehen können. Außerdem können dadurch die VOC-Emissionen der Folien und Häute unzulässig ansteigen.

Die Absorption der Gerüche durch Zugabe von geeigneten Absorptionsmitteln (z.B. Zeolithe, Aktivkohle) hat sich ebenfalls nicht als zielführend erwiesen, da dadurch die mechanischen Eigenschaften der Folien oder Häute sowie die Oberflächenqualität ungünstig beeinflusst werden.

Aus der DE 10 2004 023 658 A1 ist die Verwendung einer Polymerlackzusammensetzung zur Herstellung von Elastomerhäuten oder deren Ausbesserung für Innenverkleidungen im Fahrzeugbau bekannt. Eine derartige Polymerlackzusammensetzung wird zur Versiegelung oder zur Ausbesserung von Elastomerhäuten verwendet, bevor diese in einem Formwerkzeug hinterschäumt werden. Die Polymerlackzusammensetzung enthält ein durch Suspensionspolymerisation erhaltenes Polyvinylchlorid (S-PVC) zusammen mit einem Weichmacher und einem Wärmestabilisator in einem Lösungsmittel oder Lösungsmittelgemisch. Als bevorzugt werden beispielhaft Weichmacher genannt, die auf Trimelitat, Phtalat oder linearen Kohlenwasserstoffen basieren.

Die DE 10 2010 061 871 A1 beschreibt eine Polymer-Zusammensetzung mit Terephtalsäurediisononylester als Weichmacher, wobei zur Herabsetzung der Verarbeitungstemperatur zumindest ein weiterer Weichmacher vorgesehen ist. Eine solche Polymerzusammensetzung kann zur Herstellung von Formkörpern verwendet werden.

### DARSTELLUNG DER ERFINDUNG

Aufgabe der vorliegenden Erfindung ist es, ein Verfahren zur Herstellung einer ein thermoplastisches Polymerisat aufweisenden Folie durch Gelieren oder Sintern eines Gemisches aus Thermoplast und Weichmacher anzugeben, das dazu führt, dass nach diesem Verfahren hergestellte Folien beziehungsweise Formkörper keine unangenehmen Gerüche abgeben.

Diese Aufgabe wird gelöst durch ein Verfahren mit den Merkmalen des Anspruchs 1.

Das erfindungsgemäße Verfahren umfasst die Verfahrensschritte:
a) Bereitstellen eines Gemisches aus einem Thermoplast und einer Mischung aus einem ersten Weichmacher und zumindest einem weiteren Weichmacher;
b) Aufbringen des in Schritt a) bereitgestellten Gemisches auf eine Formoberfläche und Verteilen des Gemisches auf der Formoberfläche;
c) Erwärmen des auf der Formoberfläche befindlichen Gemisches auf eine vorgegebene Sintertemperatur für einen vorgegebenen Zeitraum, um das Gemisch zu gelieren;
d) Abkühlen des auf der Formoberfläche befindlichen Gemisches.

Es zeichnet sich gegenüber dem Stand der Technik dadurch aus,
- dass der erste Weichmacher ein Phthalsäureester oder Terephtalsäureester mit zwei Alkoholgruppen oder ein Trimellitsäureester mit drei Alkoholgruppen ist und Heptanol (C₇H₁₆O) und/oder Nonanol (C₉H₂₀O) und/oder Undecanol (C₁₁H₂₄O) aufweist oder damit gebildet ist und
- dass der zumindest eine weitere Weichmacher aus einer der Substanzen der beiden nachstehend aufgeführten Substanzgruppen oder aus beliebigen Mischungen der Substanzen einer oder beider dieser Substanzgruppen besteht, nämlich:
   - erste Substanzgruppe:
      Phthalsäureester oder Terephtalsäureester mit zwei Alkoholgruppen oder Trimellitsäureester mit drei Alkoholgruppen, wobei der Ester zumindest einen Alkohol aus der nachstehenden Liste enthält oder mit einem solchen Alkohol gebildet ist:
         - Phenylmethanol (C₇H₈O),
         - 1-Phenylethanol (C₈H₁₀O),
         - 2-Phenylethanol (C₈H₁₀O),
         - 2-Cyclohexylethanol (C₈H₁₆O),
         - 2-Phenoxyethanol (C₈H₁₀O₂),
         - 2-Methoxyphenol (C₇H₈O₂) [Guajacol],
         - 3-Phenyl-1-Propanol (C₉H₁₂O),
         - 3-Phenyl-Allylalkohol (C₉H₁₀O),
         - 4-Methoxy-Benzylalkohol (C₈H₁₀O₂) [Anisalkohol],
         - Borneol und Isomere davon (C₁₀H₁₈O);
   - zweite Substanzgruppe:
      Pentaerythryl-Monoacetale oder Pentaerythryl-Diacetale der allgemeinen Formeln: 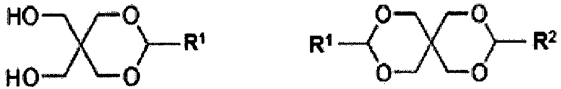
      wobei R¹ einen ersten Aldehyd und R² einen zweiten Aldehyd bezeichnet.

Der Erfinder hat erkannt, dass-bei wenigen Ausnahmen-die durch den thermischen Abbau der Weichmacher gebildeten Alkohole unangenehm riechen, wenn die Anzahl der Kohlenstoffatome der jeweiligen Kohlenstoffkette geradzahlig ist (C₄, C₆, C₈, C₁₀, etc.). Nach dem Stand der Technik werden lediglich Weichmacher mit C₆-, C₈- und C₁₀-Alkoholen eingesetzt, manchmal in Abmischungen mit C₉-Alkohol. Auf diese Weichmacher mit geradzahligen Kohlenstoffketten wird-bis auf die wenigen im Anspruch 1 aufgeführten Ausnahmen-nun gezielt verzichtet und es werden vorwiegend Weichmacher verwendet, die einen Weichmacheralkohol aufweisen, bei dem die Anzahl der Kohlenstoffatome der jeweiligen Kohlenstoffkette ungeradzahlig ist.

Bevorzugt werden Alkohole eingesetzt, deren Kohlenstoffketten zwischen sieben und elf Kohlenstoffatome aufweisen, da sich die mit solche Alkohole aufweisenden Weichmachern gebildeten Folien oder Formkörper besonders gut für den Einsatz in Fahrzeugen eignen. Alkohole mit kleineren Kohlenstoffketten als C₇ sind ungeeignet, da sie zu flüchtig sind, und Alkohole mit größeren Ketten als C₁₁ sind ungeeignet, da die damit gebildeten Phtalalsäureester, Terephtalsäureester und Trimellitsäureester aufgrund der Molekülgröße vom PVC-Pulver nicht mehr ausreichend aufgesaugt werden, und damit kein rieselfähiges Kunststoffpulver mehr hergestellt werden kann.

Das erfindungsgemäße Verfahren kann entweder als Plastisol-Verfahren oder als Pulverslush-Verfahren durchgeführt werden.

Vorteilhafte Weiterbildungen des erfindungsgemäßen Verfahrens sind in den abhängigen Ansprüchen angegeben.

Dabei ist es von Vorteil, wenn-bei Anwendung der zweiten Stoffgruppe-die Pentaerythryl-Monoacetale oder Pentaerythryl-Diacetale mit zumindest einem Aldehyd (R¹, R²) aus der folgenden Liste gebildet sind:
- 3-Methylbutanal (C₅H₁₀O) [Isovaleraldehyd]
- Citral (C₁₀H₁₆O) oder seine Isomere Geranial und Neral,
- Vanillin (C₈H₈O₃),
- Methylvanillin (C₉H₁₀O₃),
- Ethylvanillin (C₉H₁₀O₃),
- Zimtaldehyd (C₉H₈O),
- Hydrozimtaldehyd (C₉H₁₀O),
- α-Pentyl-Zimtaldehyd (C₁₄H₁₈O) [Jasminaldehyd],
- 4-lsopropyl-Benzaldehyd (C₁₀H₁₂O) [Cuminaldehyd].

Zwar sind in US 7 993 633 B2 Ester beschrieben, die geruchsverbessernde Wirkung haben, doch sind diese nicht für die Verwendung im Innenraum eines Fahrzeugs geeignet, da sie zu flüchtig sind. Dagegen ist beispielsweise das von den nach dieser vorteilhaften Ausbildung verwendeten Pentaerythryl-Diacetalen nach Abspaltung der Aldehyde R1 und R2 verbleibende Pentaerythrit sehr schwer flüchtig und beeinflusst den für den Einsatz in Fahrzeug-Innenräumen vorgeschriebenen Emissionstest nicht. Die Herstellung solcher Diacetale ist zum Beispiel beschrieben in EP 0 905 115 A1. Die Freisetzung von Citral aus einem Acetal ist beschrieben in US 6 506 793 B2, allerdings ist der zur Bildung des Acetals verwendete Di-Alkohol im Gegensatz zu Pentaerythrit leicht flüchtig; dieses Acetal ist deshalb wegen hoher Emissionen nicht für den Einsatz in Fahrzeug-Innenräumen geeignet

Vorzugsweise enthält keiner der beiden Weichmacher einen Alkohol aus der nachstehenden Liste oder ist mit einem solchen Alkohol gebildet:
- 1-Hexanol (C₆H₁₄O) oder isomere lineare Hexanole,
- 2-Methylpentanol (C₆H₁₄O) oder isomere verzweigte Hexanole,
- 1-Octanol (C₈H₁₈O) oder isomere lineare Octanole,
- 2-Ethylhexanol (C₈H₁₈O) oder isomere verzweigte Octanole,
- 1-Decanol (C₁₀H₂₂O) oder isomere lineare oder verzweigte Decanole.

Weichmacher mit diesen Alkoholen werden gemäß dieser Weiterbildung explizit vom erfindungsgemäßen Verfahren ausgeschlossen, da diese Weichmacher bei der Verarbeitung zu unangenehm riechenden Abbauprodukten führen können.

Vorteilhaft ist eine Weiterbildung des erfindungsgemäßen Verfahrens, gemäß der der Thermoplast bei Raumtemperatur beim Mischen mit den Weichmachern im Schritt a) flüssig oder fest, insbesondere pulverförmig, ist.

Bei einer weiteren vorteilhaften Ausbildung des erfindungsgemäßen Verfahrens, die mit anderen Ausbildungen kombiniert werden kann, ist der erste Weichmacher und/oder der zumindest eine weitere Weichmacher bei Raumtemperatur beim Mischen mit dem Thermoplast im Schritt a) flüssig oder fest, insbesondere pulverförmig.

Bevorzugterweise weist das gebildete thermoplastische Polymerisat Polyvinylchlorid (PVC) auf.

Schließlich ist die Erfindung auch auf eine Folie aus oder mit einem thermoplastischen Polymerisat, hergestellt nach einem Verfahren gemäß der Erfindung, und weiterhin auch auf einen Formkörper aus oder mit einer solchen Folie gerichtet.

### DARSTELLUNG VON BEVORZUGTEN AUSFÜHRUNGSBEISPIELEN

Die Erfindung wird nachstehend anhand von Beispielen näher erläutert.

Mit dem erfindungsgemäßen Verfahren lassen sich weiche, elastische PVC-Folien durch Sintern von pulverförmigen PVC-Weichmacher-Mischungen - im Folgenden auch als "Drysol" bezeichnet - oder durch Streichen gefolgt von thermischem Gelieren von flüssigen PVC-Weichmacher-Mischungen - im Folgenden auch als "Plastisol" bezeichnet - herstellen, wobei die Weichmacher-Mischungen der ersten Weichmacher Alkohole aus den erfindungsgemäß vorgesehenen ersten Alkoholgruppen Heptanol (C₇H₁₆O) und/oder Nonanol (C₉H₂₀O) und/oder Undecanol (C₁₁H₂₄O) aufweisen. Als erste Weichmacher kommen folgende mit diesen Alkoholen gebildete Substanzen in Frage:

| | |
|---|---|
| Phtalsäureester: | 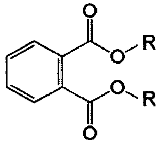 |
| oder | |
| Terephtalsäureester: | 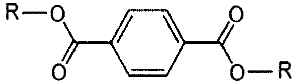 |
| oder | |
| Trimellitsäureester: | 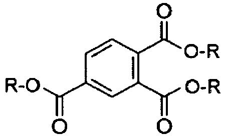 |

Diese Weichmacher können mit 1 % bis 50 % (bezogen auf die gesamte Weichmachermasse) weiterer Weichmacher gemischt sein. Diese weiteren Weichmacher können entweder ebenfalls Phthalsäureester, Terephtalsäureester oder Trimellitsäureester der ersten Substanzgruppe sein, die mit zumindest einem der so genannte "Parfümalkohole" bildenden Alkohole gebildet sein können, die nachstehend aufgeführt sind:
- Phenylmethanol (C₇H₈O),
- 1-Phenylethanol (C₈H₁₀O),
- 2-Phenylethanol (C₈H₁₀O),
- 2-Cyclohexylethanol (C₈H₁₆O),
- 2-Phenoxyethanol (C₈H₁₀O₂),
- 2-Methoxyphenol (C₇H₈O₂) [Guajacol],
- 3-Phenyl-1-Propanol (C₉H₁₂O),
- 3-Phenyl-Allylalkohol (C₉H₁₀O),
- 4-Methoxy-Benzylalkohol (C₈H₁₀O₂) [Anisalkohol],
- Borneol und Isomere davon (C₁₀H₁₈O);
oder die mit den nachstehend wiedergegebenen Acetalen der zweiten Substanzgruppe gebildet sind:

| | |
|---|---|
| Pentaerythryl-Monoacetal: | 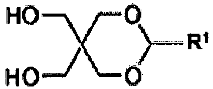 |
| oder | |
| Pentaerythryl-Diacetal: | 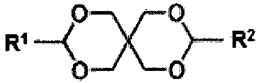 |

Dabei bezeichnet R¹ einen ersten Aldehyd und R² einen zweiten Aldehyd.

Auch Mischungen davon können verwendet werden. Diese Rezepturen setzen dann bei der thermischen Verarbeitung durch Pulver-Sintern oder durch Streichen auf eine Transportfolie geringe Mengen von wohlriechenden Alkoholen beziehungsweise Aldehyden frei.

Als Weichmacher (erste und weitere Weichmacher) mit geeigneten Alkoholen werden im Sinne dieser Erfindung folgende Verbindungen bezeichnet: 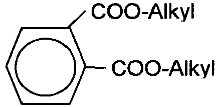 Dialkylphtalate, 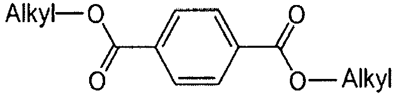 Dialkylterephtalate und 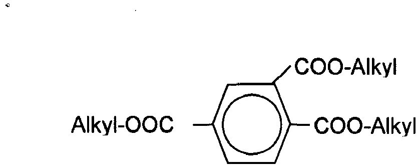 Trialkyltrimellitate,
wobei "Alkyl-" für die Herstellung des ersten Weichmachers einen Alkohol aus der nachstehenden Tabelle mit beispielhaft aufgeführten geeigneten Alkoholen bezeichnet:

| **CAS** | **Name** | | **Mp (°C)** | **Bp (°C)** | **Geruch** |
|---|---|---|---|---|---|
| **111-70-6** | **1-Heptanol** | | **-34** | **176** | **Klee** |
| | 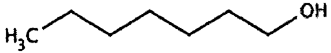 | | | | |
| | **Verzweigte Isomere von Heptanol** | | | | |
| | **z.B.** | 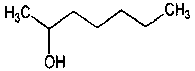 | | | |
| **143-08-8** | **1-Nonanol** | | **-6** | **215** | **Orange** |
| | 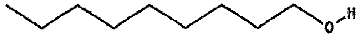 | | | | |
| | **Verzweigte Isomere von Nonanol** | | | | |
| | **z.B.** | 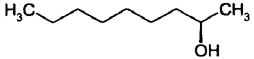 | | | |
| **112-42-5** | **1-Undecanol** | | **14** | **243** | **Zitrus** |
| | 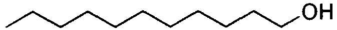 | | | | |
| | **Verzweigte Isomere von Nonanol** | | | | |
| | **z.B.** | 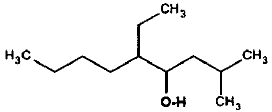 | | | |

Eingeschlossen sind auch Weichmacher, die mehr als einen Alkohol aus obiger Tabelle pro Molekül enthalten (gemischte Phtalate, Terephtalate oder Trimellitate).

Die weiteren Weichmacher können Substanzen zweier unterschiedlicher Substanzgruppen sein, nämlich - wie die vorstehend beschriebenen ersten Weichmacher - als Phtalat-, Terephtalat- und Trimellit-Weichmacher (erste Substanzgruppe) oder als Pentaerythryl-Monoacetale oder Pentaerythryl-Diacetale (zweite Substanzgruppe).

In den oben angegebenen Strukturformeln von Dialkylphtalaten, Dialkylterephtalaten und Trialkyltrimellitaten bezeichnet "Alkyl" für die Herstellung des oder der weiteren Weichmacher(s) gemäß der ersten Substanzgruppe die in der nachstehenden Tabelle beispielhaft aufgeführten Alkohole. Diese Alkohole, die auch als so genannte "Parfümalkohole" bezeichnet werden können, da sie jeweils einen angenehmen Duft entfalten, sind für die Bildung des/der weiteren Weichmacher(s) besonders geeignet:

| **CAS-Nr.** | **Name** | **Mp (°C)** | **Bp (°C)** | **Geruch** |
|---|---|---|---|---|
| **100-51-6** | **Phenyl-methanol** | **-15** | **206** | **mild, angenehm** |
| | 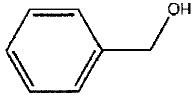 | | | |
| **98-85-1** | **1-Phenyl-ethanol** | **20** | **204** | **blumig** |
| | 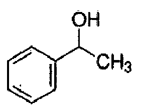 | | | |
| **60-12-8** | **2-Phenyl-ethanol** | **-27** | **220** | **Rose** |
| | 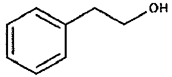 | | | |
| **4442-79-9** | **2-Cyclohexyl-ethanol** | **-20** | **207** | |
| | 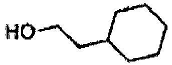 | | | |
| **122-99-6** | **2-Phenoxy-ethanol** | **14** | **242** | **Rose** |
| | 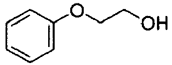 | | | |
| **90-05-1** | **2-Methoxy-phenol** | **28** | **205** | **rauchig, Kaffee** |
| | 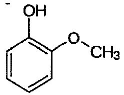 | | | |
| **122-97-4** | **3-Phenyl-1-propanol** | **-18** | **120/12mm** | **Veilchen** |
| | 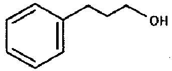 | | | |
| **104-54-1** | **3-Phenyl-allylalkohol** | **31-34** | **258** | **Zimt** |
| | 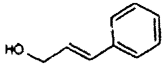 | | | |
| | | | | |
| **105-13-5** | **4-Methoxy-benzylalkohol (Anisalkohol)** | **23** | **259** | **Anis** |
| | 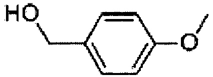 | | | |
| **464-45-9** | **Borneole** | **208-209** | (Zersetzung) | **gewürzartig** |
| | 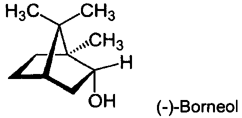 | | | |

Wie oben bereits ausgeführt worden ist, können der oder die weitere(n) Weichmacher oder auch nur ein Teil der weiteren Weichmacher aus Substanzen einer zweiten Substanzgruppe gebildet sein, nämlich aus Pentaerythryl-Monoacetal oder Pentaerythryl-Diacetal mit einem Aldehyd oder mehreren Aldehyden aus der nachstehenden Tabelle:

| **CAS-Nr.** | **Name** | **Mp (°C)** | **Bp (°C)** | **Geruch** |
|---|---|---|---|---|
| **590-55-3** | **3-Methylbutanal** (C₅H₁₀O) [Isovaleraldehyd] | **-51** | **92** | **Malzig, Brot** |
| | 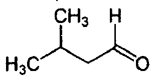 | | | |
| **5392-40-5** | **Citral** (C₁₀H₁₆O) | -12 | **229** | **Zitronengras** |
| | 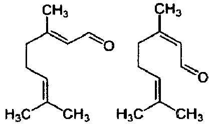 | | | |
| **6789-80-6** | **3-Hexenale** (C₆H₁₀O) als cis-oder trans-Form | | **146** (trans) | **Grün, fruchtig** |
| | 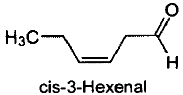 | | | |
| **96013-98-8** | **3-Hydroxy-hexanal (C₆H₁₂O₂)** | | | **fruchtig** |
| | 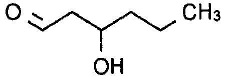 | | | |
| **121-33-5** | **Vanillin** (C₈H₈O₃) | **82** | **285** | **Vanille** |
| | 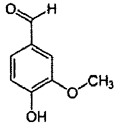 | | | |
| **120-14-9** | **Methylvanillin** (C₉H₁₀O₃) [Veratrumaldehyd] | **41-44** | **281** | **Vanille** |
| | | | | |
| | 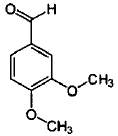 | | | |
| **121-32-4** | **Ethylvanillin** (C₉H₁₀O₃) | **75-77** | (Zersetzung) | **Vanille** |
| | 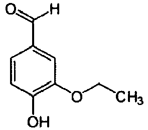 | | | |
| **104-55-2** | **Zimtaldehyd** (C₉H₈O) | **-8** | **251** | **Zimt** |
| | 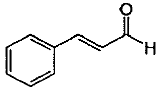 | | | |
| **104-53-0** | **Hydrozimtaldehyd** (C₉H₁₀O) | **-42** | **223** | **Hyazinthe** |
| | 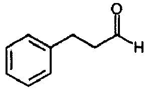 | | | |
| | **α-Pentyl-Zimtaldehyd** (C₁₄H₁₈O) [Jasminaldehyd] | | (Zersetzung) | **Zimt** |
| | 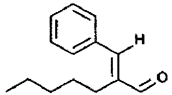 | | | |
| **14901-07-6** | **ß-lonon** | | **128** bei Vakuum 12mm Hg (0,016 bar) | **Veilchen** |
| | 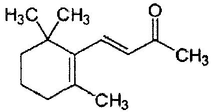 | | | |
| **122-03-2** | **4-Isopropyl-Benzaldehyd** (C₁₀H₁₂O) [Cuminaldehyd] | | **235-236** | **Eucalyptus, Myrrhe** |
| | 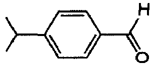 | | | |

Bei Verwendung von mehreren weiteren Weichmachern können Weichmacher aus unterschiedlichen Substanzen der ersten Substanzgruppe und/oder aus unterschiedlichen Substanzen der zweiten Substanzgruppe bestehen oder gebildet sein und diese Weichmacher können miteinander kombiniert werden. Auf diese Weise können einerseits die physikalischen Eigenschaften des mit den ausgewählten Weichmachern gebildeten Polymerisats beeinflusst werden und andererseits können besonders angenehme Duftkombinationen der freigesetzten Duftstoffe kreiert werden. Bei derartigen Weichmacherkombinationen sollte jedoch stets beachtet werden, dass nur Weichmachersubstanzen miteinander kombiniert werden, die olfaktorisch miteinander harmonieren.

Beispiele für bevorzugte Rezepturen sind in der nachstehenden Tabelle angegeben.

| **Beispielhafte Zusammensetzung von erfindungsgemäßen thermoplastischen Polymerisaten** | | **Beispiel 1** (Gew.-teile) | **Beispiel 2** (Gew.-teile) | **Beispiel 3** (Gew.-teile) | **Beispiel 4** (Gew.-teile) |
|---|---|---|---|---|---|
| **Thermoplast (Polymer):** | | | | | |
| S-PVC, K75 | Suspensions-PVC | 100 | 100 | 100 | 100 |

| **Erster Weichmacher (Basis-Weichmacher):** | | | | | |
|---|---|---|---|---|---|
| TM-9 | Tris-(1-Nonyl)-trimellitat | 50,0 | | | 55,0 |
| TM-79 | Tris-(1-Heptyl)-(1-Nonyl)-trimellitat | | 50,0 | 50,0 | |

| **Weiterer Weichmacher (Duftträger-Weichmacher):** | | | | | |
|---|---|---|---|---|---|
| TM-2-Phenyl-ethyl | Tris-(2-Phenyl-ethyl)-trimellitat | 12,0 | 12,0 | | |
| TM-3-PP | Tris-(3-Phenyl-1-propyl)-trimellitat | | | 10,0 | |
| PT-2-Van-Acetal | Pentaerithrythyl-bis-vanillyldiacetal | | | | 12,0 |

| **Stabilisatoren (beispielhafte Angaben):** | | | | | |
|---|---|---|---|---|---|
| ESO | Epoxidiertes Sojaöl kostabilisator | 3,0 | 3,0 | 3,0 | 3,0 |
| Loxiol® G16 | Teil-fettsäureverestertes Glyzerin | 0,6 | 0,6 | 0,6 | 0,6 |
| Wachs E | Erucasäure-amid | 0,2 | 0,2 | 0,2 | 0,2 |
| Kalzium Stearat | | 1,0 | 1,0 | 1,0 | 1,0 |
| Zink Stearat | | 0,5 | 0,5 | 0,5 | 0,5 |
| NaClO₄ | | 0,5 | 0,5 | 0,5 | 0,5 |
| Irganox® 1030 | Pentaerythrityl-tetrakis[3-(3,5-di-tert-butyl-4-hydroxyphenyl)propionate] | 0,5 | 0,5 | 0,5 | 0,5 |
| | | | | | |
| **Shore A Härte** | | **74** | **72** | **75** | **75** |
| **Geruchsnote** | | **Rose** | **Rose** | **blumig** | **Vanille** |

Die jeweilige Mischung besteht aus dem Thermoplast (einem Polymer), dem ersten Weichmacher, der eine Weichmacher-Basis aus einem kostengünstig verfügbaren Stoff bildet, dem zumindest einen weiteren Weichmacher, der einen Duftträger-Weichmacher bildet, und handelsüblichen Stabilisatoren, die hier lediglich beispielhaft angegeben sind. Die Werteangaben in der Tabelle sind Gewichtsanteile des jeweiligen Stoffs, wobei die für die Weichmacher und die Stabilisatoren angegebenen Gewichtsanteilwerte zu den 100 Gewichtsanteilen des Thermoplasten hinzukommen.

Der Thermoplast ist im angegebenen Beispiel ein Suspensions-PVC mit einem K-Wert von 75, wobei Thermoplaste mit einem K-Wert von 65 bis 75 für den vorliegenden Einsatzzweck geeignet sind. Die Gesamtmenge der hinzugegebenen Weichmacher [erster und weitere(r) Weichmacher] kann zwischen 25 und 80 Gewichtsanteilen betragen. Dabei beträgt der Anteil des/der weiteren Weichmacher(s), also des/der als "Duft-Weichmacher" bezeichneten dominierenden Duftträger(s), 1 % bis 50 % der Gesamt-Gewichtsanteile der hinzugegebenen Weichmacher. Zwar ist in den Beispielen der Tabelle immer nur ein weiterer Weichmacher als Duft-Weichmacher angegeben, doch kann als Duft-Weichmacher auch eine Kombination von mehreren weiteren Weichmachern vorgesehen sein.

Grundsätzlich ist es natürlich auch möglich, auf den ersten Weichmacher zu verzichten und eine entsprechend größere Menge eines einzigen Duft-Weichmachers zu verwenden oder auch einen Duft-Weichmacher als Basis-Weichmacher und einen oder mehrere weitere(n) Weichmacher als zusätzliche(n) Duft-Weichmacher zu verwenden, doch sind diese Varianten aus Kostengründen für die Praxis uninteressant.

Die qualitative und quantitative Auswahl der Stabilisatoren liegt im Belieben des Fachmanns und ist für die Erfindung nur von untergeordneter Bedeutung. Die Art und die Zusammensetzung der Stabilisatoren-Komponente des erfindungsgemäßen thermoplastischen Polymerisats sind daher nur beispielhaft angegeben und nicht erfindungswesentlich.

Die Erfindung ist nicht auf die obigen Ausführungsbeispiele beschränkt, die lediglich der allgemeinen Erläuterung des Kerngedankens der Erfindung dienen. Im Rahmen des Schutzumfangs können die erfindungsgemäßen Verfahren vielmehr auch andere als die oben beschriebenen Ausgestaltungsformen annehmen. Die Verfahren können hierbei insbesondere Merkmale aufweisen, die eine Kombination aus den jeweiligen Einzelmerkmalen der Ansprüche darstellen.

## Patentansprüche

1. Verfahren zur Herstellung einer ein thermoplastisches Polymerisat aufweisenden Folie durch Gelieren oder Sintern eines Gemisches aus Thermoplast und Weichmacher mit den Schritten:
a) Bereitstellen eines Gemisches aus einem Thermoplast und einer Mischung aus einem ersten Weichmacher und zumindest einem weiteren Weichmacher;
b) Aufbringen des in Schritt a) bereitgestellten Gemisches auf eine Formoberfläche und Verteilen des Gemisches auf der Formoberfläche;
c) Erwärmen des auf der Formoberfläche befindlichen Gemisches auf eine vorgegebene Sintertemperatur für einen vorgegebenen Zeitraum, um das Gemisch zu gelieren;
d) Abkühlen des auf der Formoberfläche befindlichen Gemisches;
**dadurch gekennzeichnet,**
- **dass** der erste Weichmacher ein Phthalsäureester oder ein Terephtalsäureester mit zwei Alkoholgruppen oder ein Trimellitsäureester mit drei Alkoholgruppen ist und Heptanol (C₇H₁₆O) und/oder Nonanol (C₉H₂₀O) und/oder Undecanol (C₁₁H₂₄O) aufweist oder damit gebildet ist und
- **dass** der zumindest eine weitere Weichmacher aus einer der Substanzen der beiden nachstehend aufgeführten Substanzgruppen oder aus beliebigen Mischungen der Substanzen einer oder beider dieser Substanzgruppen besteht, nämlich:
- erste Substanzgruppe:
Phthalsäureester oder Terephtalsäureester mit zwei Alkoholgruppen oder Trimellitsäureester mit drei Alkoholgruppen, wobei der Ester zumindest einen Alkohol aus der nachstehenden Liste enthält oder mit einem solchen Alkohol gebildet ist:
• Phenylmethanol (C₇H₈O),
• 1-Phenylethanol (C₈H₁₀O),
• 2-Phenylethanol (C₈H₁₀O),
• 2-Cyclohexylethanol (C₈H₁₆O),
• 2-Phenoxyethanol (C₈H₁₀O₂),
• 2-Methoxyphenol (C₇H₈O₂) [Guajacol],
• 3-Phenyl-1-Propanol (C₉H₁₂O),
• 3-Phenyl-Allylalkohol (C₉H₁₀O),
• 4-Methoxy-Benzylalkohol (C₈H₁₀O₂) [Anisalkohol],
• Borneol und Isomere davon (C₁₀H₁₈O);
- zweite Substanzgruppe:
Pentaerythryl-Monoacetale oder Pentaerythryl-Diacetale der allgemeinen Formeln: 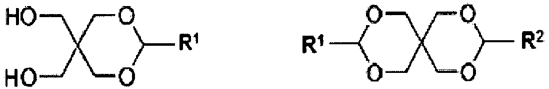
Wobei R¹ einen ersten Aldehyd und R² einen zweiten Aldehyd bezeichnet.

2. Verfahren nach Anspruch 1,
**dadurch gekennzeichnet,**
**dass** die Pentaerythryl-Monoacetale oder Pentaerythryl-Diacetale mit zumindest einem Aldehyd (R¹, R²) aus der folgenden Liste gebildet sind:
• 3-Methylbutanal (C₅H₁₀O) [Isovaleraldehyd]
• Citral (C₁₀H₁₆O) oder seine Isomere Geranial und Neral,
• Vanillin (C₈H₈O₃),
• Methylvanillin (C₉H₁₀O₃),
• Ethylvanillin (C₉H₁₀O₃),
• Zimtaldehyd (C₉H₈O),
• Hydrozimtaldehyd (C₉H₁₀O),
• α-Pentyl-Zimtaldehyd (C₁₄H₁₈O) [Jasminaldehyd],
• 4-lsopropyl-Benzaldehyd (C₁₀H₁₂O) [Cuminaldehyd].

3. Verfahren nach Anspruch 1 oder 2,
**dadurch gekennzeichnet,**
**dass** keiner der beiden Weichmacher einen Alkohol aus der nachstehenden Liste enthält oder mit einem solchen Alkohol gebildet ist:
• 1-Hexanol (C₆H₁₄O) oder isomere lineare Hexanole,
• 2-Methylpentanol (C₆H₁₄O) oder isomere verzweigte Hexanole,
• 1-Octanol (C₈H₁₈O) oder isomere lineare Octanole,
• 2-Ethylhexanol (C₈H,₈O) oder isomere verzweigte Octanole,
• 1-Decanol (C₁₀H₂₂O) oder isomere lineare oder verzweigte Decanole.

4. Verfahren nach Anspruch 1, 2 oder 3,
**dadurch gekennzeichnet,**
**dass** der Thermoplast bei Raumtemperatur beim Mischen mit den Weichmachern im Schritt a) flüssig oder fest, insbesondere pulverförmig, ist.

5. Verfahren nach einem der vorhergehenden Ansprüche,
**dadurch gekennzeichnet,**
**dass** der erste Weichmacher und/oder der zumindest eine weitere Weichmacher bei Raumtemperatur beim Mischen mit dem Thermoplast im Schritt a) flüssig oder fest, insbesondere pulverförmig, ist.

6. Verfahren nach einem der vorhergehenden Ansprüche,
**dadurch gekennzeichnet,**
**dass** das gebildete thermoplastische Polymerisat Polyvinylchlorid (PVC) aufweist.

7. Verfahren nach einem der vorhergehenden Ansprüche,
**dadurch gekennzeichnet,**
**dass** die Formoberfläche oder das Formwerkzeug vor dem Aufbringen beziehungsweise Einfüllen des Gemisches im Schritt b) erwärmt wird.

8. Verfahren nach einem der vorhergehenden Ansprüche,
**dadurch gekennzeichnet,**
**dass** der Anteil des zumindest einen weiteren Weichmachers 1% bis 50% der Gesamt-Gewichtsanteile der zum Thermoplast hinzugegebenen Weichmacher beträgt.

9. Verfahren nach einem der vorhergehenden Ansprüche,
**dadurch gekennzeichnet,**
**dass** eine Kombination von mehreren weiteren Weichmachern vorgesehen ist.

10. Folie aus oder mit einem thermoplastischen Polymerisat, hergestellt nach einem Verfahren gemäß einem der Ansprüche 1 bis 9.

11. Formkörper aus oder mit einer Folie aus einem thermoplastischen Polymerisat, hergestellt nach einem Verfahren gemäß einem der Ansprüche 1 bis 9.

## Claims

1. A method for preparing a film that contains a thermoplastic polymer mixture by gelling or sintering a mixture of thermoplastic and plasticiser, having the following steps:
a) providing a mixture of a thermoplastic and a mixture of a first plasticiser and at least one further plasticiser;
b) applying the mixture that was provided in step a) to a mould surface, and distributing the mixture over the mould surface;
c) heating the mixture that is on the mould surface to a predetermined sintering temperature for a predetermined period in order to gel the mixture;
d) cooling the mixture that is on the mould surface;
**characterised**
- **in that** the first plasticiser is a phthalic acid ester or a terephthalic acid ester having two alcohol groups or a trimellitic acid ester having three alcohol groups, and contains or is formed with heptanol (C₇H₁₆O) and/or nonanol (C₉H₂₀O) and/or undecanol (C₁₁H₂₄O), and
- **in that** the at least one further plasticiser comprises one of the substances of the two substance groups listed below or any desired mixtures of the substances of one or both of these substance groups, namely:
- first substance group:
phthalic acid ester or terephthalic acid ester having two alcohol groups or trimellitic acid ester having three alcohol groups, wherein the ester contains at least one alcohol in the list below or is formed with such an alcohol:
• phenylmethanol (C₇H₈O)
• 1-phenylethanol (C₈H₁₀O)
• 2-phenylethanol (C₈H₁₀O)
• 2-cyclohexylethanol (C₈H₁₆O)
• 2-phenoxyethanol (C₈H₁₀O₂)
• 2-methoxyphenol (C₇H₈O₂) [guaiacol]
• 3-phenyl-1-propanol (C₉H₁₂O)
• 3-phenyl allyl alcohol (C₉H₁₀O)
• 4-methoxybenzyl alcohol (C₈H₁₀O₂) [anisyl alcohol]
• borneol and isomers thereof (C₁₀H₁₈O)
- second substance group:
pentaerythryl monoacetals and pentaerythryl diacetals of the general formulae 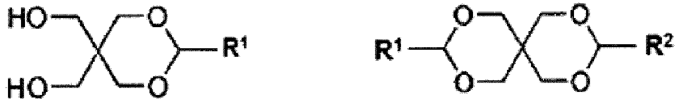
where R¹ represents a first aldehyde and R² represents a second aldehyde.

2. A method according to Claim 1,
**characterised in that**
the pentaerythryl monoacetals or pentaerythryl diacetals are formed with at least one aldehyde (R¹, R²) from the following list:
• 3-methylbutanal (C₅H₁₀O) [isovaleraldehyde]
• citral (C₁₀H₁₆O) or its isomers geranial and neral
• vanillin (C₈H₈O₃)
• methyl vanillin (C₉H₁₀O₃)
• ethyl vanillin (C₉H₁₀O₃)
• cinnamaldehyde (C₉H₈O)
• hydrocinnamaldehyde (C₉H₁₀O)
• a-pentyl-cinnamaldehyde (C₁₄H₁₈O) [jasmine aldehyde],
• 4-isopropyl-benzaldehyde (C₁₀H₁₂O) [cuminaldehyde].

3. A method according to Claim 1 or 2,
**characterised in that**
neither of the two plasticisers contains an alcohol from the list below or is formed with such an alcohol:
• 1-hexanol (C₆H₁₄O) or isomeric linear hexanols,
• 2-methylpentanol (C₆H₁₄O) or isomeric branched hexanols,
• 1-octanol (C₈H₁₈O) or isomeric linear octanols,
• 2-ethylhexanol (C₈H₁₈O) or isomeric branched octanols,
• 1-decanol (C₁₀H₂₂O) or isomeric linear or branched decanols.

4. A method according to Claim 1, 2 or 3,
**characterised in that**
the thermoplastic is liquid or solid, in particular is in powder form, at room temperature when it is mixed with the plasticisers in step a).

5. A method according to one of the preceding claims,
**characterised in that**
the first plasticiser and/or the at least one further plasticiser is liquid or solid, in particular is in powder form, at room temperature when it is mixed with the thermoplastic in step a).

6. A method according to one of the preceding claims,
**characterised in that**
the thermoplastic polymer mixture that is formed includes polyvinyl chloride (PVC).

7. A method according to one of the preceding claims,
**characterised in that**
the mould surface or the mould is heated before the mixture is applied or put in in step b).

8. A method according to one of the preceding claims,
**characterised in that**
the proportion of the at least one further plasticiser is 1% to 50% of the total content by weight of the plasticisers added to the thermoplastic.

9. A method according to one of the preceding claims,
**characterised in that**
a combination of a plurality of further plasticisers is provided.

10. A film comprising or containing a thermoplastic polymer mixture, prepared by a method according to one of Claims 1 to 9.

11. A moulding comprising or containing a film comprising a thermoplastic polymer mixture, prepared by a method according to one of Claims 1 to 9.

## Revendications

1. Procédé de fabrication d'une feuille présentant un polymérisat thermoplastique par gélification ou frittage d'un mélange d'un thermoplastique et d'un plastifiant, comprenant les étapes consistant à :
a) approvisionner un mélange d'un thermoplastique et d'un premier plastifiant et d'au moins un autre plastifiant ;
b) appliquer le mélange approvisionné dans l'étape a) sur une surface de moulage et répartir le mélange sur la surface de moulage ;
c) chauffer le mélange situé sur la surface de moulage à une température de frittage prédéterminée pendant une période prédéterminée, afin de gélifier le mélange ;
d) refroidir le mélange situé sur la surface de moulage ;
**caractérisé en ce que**
- le premier plastifiant est un ester d'acide phtalique ou un ester d'acide téréphtalique avec deux groupes alcools ou un ester d'acide trimellitique avec trois groupes alcools, et comprend de l'heptanol (C₇H₁₆O) et/ou du nonanol (C₉H₂₀O) et/ou de l'undécanol (C₁₁H₂₄O), ou bien est constitué de ceux-ci, et
- ledit au moins un autre plastifiant est constitué de l'une des substances des deux groupes de substances mentionnés ci-après ou de mélanges quelconques des substances de l'un ou des deux de ces groupes de substances, à savoir :
- premier groupe de substances :
ester d'acide phtalique ou ester d'acide téréphtalique avec deux groupes alcools ou ester d'acide trimellitique avec trois groupes alcools, l'ester comprenant au moins un alcool de la liste suivante, ou étant constitué d'un tel alcool :
• phénylméthanol (C₇H₈O)
• 1-phényléthanol (C₈H₁₀O)
• 2-phényléthanol (C₈H₁₀O)
• 2-cyclohexyléthanol (C₈H₁₆O)
• 2-phénoxyéthanol (C₈H₁₀O₂)
• 2-méthoxyphénol (C₇H₈O₂) [Guajacol]
• 3-phényl-1-propanol (C₉H₁₂O)
• 3-phényl-alcool allylique (C₉H₁₀O)
• 4-méthoxy-alcool benzylique (C₈H₁₀O₂) [alcool anisique]
• bornéol et ses isomères (C₁₀H₁₈O);
- second groupe de substances :
monoacétals de pentaerythryl ou pentaerythryl-diacetals des formules générales 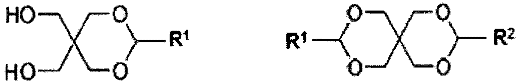
dans lesquelles
R¹ désigne un premier aldéhyde et R² désigne un second aldéhyde.

2. Procédé selon la revendication 1,
**caractérisé en ce que**
les monoacétals de pentaerythryl ou des diacétals de pentaerythryl sont formés avec au moins un aldéhyde (R¹, R²) parmi la liste suivante :
• 3-méthylbutanal (C₅H₁₀O) [isovaléraldéhyde]
• citral (C₁₀H₁₆O) ou ses isomères géranial et néral,
• vanilline (C₈H₈O₃)
• méthyl-vanilline (C₉H₁₀O₃)
• éthyl-vanilline (C₉H₁₀O₃)
• aldéhyde cinnamique (C₉H₈O)
• aldéhyde cinnamique hydrique (C₉H₁₀O)
• α-pentyle-aldéhyde cinnamique (C₁₄H₁₈O) [jasminaldéhyde]
• 4-isopropyle-benzaldéhyde (C₁₀H₁₂O) [cuminaldéhyde]

3. Procédé selon la revendication 1 ou 2,
**caractérisé en ce que**
aucun des deux plastifiants ne contient de l'alcool parmi la piste suivante ou n'est formé avec un tel alcool :
• 1-hexanol (C₆H₁₄O) ou des hexanols isomères linéaires,
• 2-méthylpentanol (C₆H₁₄O) ou des hexanols isomères ramifiés,
• 1-octanol (C₈H₁₈O) ou des octanols isomères linéaires,
• 2-ethylhexanol (C₈H₁₈O) ou des octanols isomères ramifiés,
• 1-décanol (C₁₀H₂₂O) ou des décanols isomères linéaires ou ramifiés.

4. Procédé selon la revendication 1, 2 ou 3,
**caractérisé en ce que**
lors du mélangeage avec les plastifiants dans l'étape a), le thermoplastique est liquide ou solide, en particulier en forme de poudre, à température ambiante.

5. Procédé selon l'une des revendications précédentes,
**caractérisé en ce que**
lors du mélangeage avec le thermoplastique dans l'étape a), le premier plastifiant et/ou ledit au moins un autre plastifiant est liquide ou solide, en particulier en forme de poudre, à température ambiante.

6. Procédé selon l'une des revendications précédentes,
**caractérisé en ce que**
le polymérisat thermoplastique formé présente du chlorure de polyvinyle (PVC).

7. Procédé selon l'une des revendications précédentes,
**caractérisé en ce que**
la surface de moulage ou l'outil de moulage est chauffé(e) avant de déposer ou de remplir le mélange dans l'étape b).

8. Procédé selon l'une des revendications précédentes,
**caractérisé en ce que**
la part dudit au moins un autre plastifiant est de 1 % à 50 % des parts pondérales totales des plastifiants ajoutés au thermoplastique.

9. Procédé selon l'une des revendications précédentes,
**caractérisé en ce que**
il est prévu une combinaison de plusieurs autres plastifiants.

10. Feuille constituée de ou comprenant un polymérisat thermoplastique, produit selon l'une des revendications 1 à 9.

11. Corps moulé constitué de ou comprenant une feuille en polymérisat thermoplastique, produit selon l'une des revendications 1 à 9.
